# EUROPEAN PATENT APPLICATION

(11) **EP 0 812 878 A2**
(43) Date of publication of application: **17.12.1997**
(21) Application number: 97109387.7
(22) Date of filing: 10.06.1997
(51) Int. Cl.: C08K 5/00, C08L 67/06, C08L 57/00, C08K 13/02

(54) **Improved initiator systems for curing unsaturated polyester and vinyl ester resin compositions**

(30) Priority: 14.06.1996 US 666657
(71) Applicant: WITCO CORPORATION, Greenwich, CT 06831 (US)
(72) Inventor: Pettijohn, Ted, Longview, Texas 75605 (US); Wells, Michael, Longview, Texas 75601 (US)
(74) Representative: Hansen, Bernd, Dr. Dipl.-Chem.

(57) **Abstract**

Disclosed are heat-curable polymer compositions comprising a resin of ethylenically unsaturated polyester or vinyl ester, an organic peroxide initiator component, a promoter for decomposition of said peroxide, and an inhibitor of polymerization of the resin, wherein the inhibitor is present in an amount with respect to the amount of promoter present such that the gel time of the composition is independent of the amount of promoter present. Observance of the indicated ratio between promoter and inhibitor provides the advantages of both components and also enables the operator to obtain curing performance and characteristics as a function solely of the peroxide content of the composition.

## Description

The present invention relates to compositions containing unsaturated polyester and/or vinyl ester resins which are capable of being cured upon application of heat to the composition.

More particularly, the present invention relates to improvements in the additives compounded into such compositions so as to provide satisfactory control of the curing conditions.

Heat-curable polymer resin compositions, in particular such compositions wherein the polymer comprises-one or more polyesters and/or vinyl esters containing ethylenic unsaturation, are known in the art in general. Such compositions generally contain a major amount of one or more heat-curable ethylenically unsaturated polyester and/or vinyl ester products, together with suitable additives. The curing is effected by the formation of bonds between the ethylenic double bonds on the molecules. Optionally, one may include one or more ethylenically unsaturated monomers and/or cross-linking agents, in which case the heat-instigated curing proceeds by the reaction between the respective monomer(s) and/or crosslinking agents with the ethylenic double bonds of the polymer molecules.

The curing of the unsaturated resin generally proceeds through a free radical-initiated mechanism. All initiator is added which is typically an organic peroxide, or a mixture of organic peroxides, which decompose to form a pair of moieties each containing an unpaired oxygen atom which serves to initiate the reaction by which the polymeric resin is cured.

Inhibitors have been used in this field to stabilize free, polymerizable monomers from premature polymerization. Inhibitors scavenge free radicals that could otherwise initiate the polymerization reaction. Inhibitors thereby lengthen the shelf life and the cure time of olefinic monomer compositions and products which contain polymerizable monomers.

A completely satisfactory heat-curable polyester or vinyl ester composition must satisfy several different criteria. Satisfying all these criteria even to a reasonable degree is highly challenging, not least because some of the criteria are somewhat conflicting with each other. For instance, the heat-curable composition should be capable of curing at a satisfactory rate and within a satisfactory period of time upon exposure to heat. On the other hand, the ability of the composition to begin to cure requires formulation so that the composition will not begin to cure before the user desires cure to begin. Thus, the use of additives that would inhibit premature curing would be expected to interfere with the onset, and/or the rate, of cure when cure would in fact be desired.

Similarly, it is often desirable that the heat-curable composition exhibit a satisfactory gel time, by which is meant the length of time from the initial exposure to conditions effective to initiate curing, to the point at which curing has proceeded sufficiently to form a visible gel. However, it is also desirable that a heat-curable composition should exhibit a reasonable pot life; that is, in applications such as the production of extruded, molded, or other shaped forms wherein the composition is exposed to conditions that initiate cure and the composition is required to undergo shaping operations and the like before becoming completely cured, it is desirable that the curing proceed at a rate sufficiently moderated that the extrusion or other desired working can be effected upon the entire quantity of curable composition before the curing has proceeded so far that subsequent extrusion or other shaping operations cannot be carried out.

Achievement of these several objectives has conventionally required the use of promoters, or inhibitors, under conditions in which a compromise is reached between the various desired characteristics of the composition, its curing performance, and the properties of the cured product. Even so, achieving such a compromise has required balancing of various additives, their amounts, and the several variables affecting cure performance.

There thus remains a need in this field for identification of formulation characteristics whereby it becomes possible to realize to the fullest extent the advantages of heat-curable polyester and vinyl ester compositions. There also remains a need in this field for compositions which achieve the desirable characteristics while simplifying the number of operating variables that the user must attend to in obtaining optimum performance.

The present invention achieves these objectives, and also achieves the other benefits and advantages described herein.

The present invention is directed to a heat-curable polymer composition comprising
(a) a resin selected from the group consisting of ethylenically unsaturated polyesters, vinyl esters, and mixtures thereof;
(b) an organic peroxide which is capable upon heating to decompose into free radicals which initiate polymerization curing of said resin, which peroxide exhibits a ten-hour half-life temperature greater than or equal to 30°C.; and
(c) a promoter for decomposition of said peroxide and an inhibitor of polymerization curing of said resin, wherein said inhibitor is present in an amount with respect to the amount of said promoter present such that the gel time of said composition is independent of the amount of said promoter that is present.

The present invention is further directed to a method of curing an ethylenically unsaturated resin, comprising heating such a heat-curable polymer composition to a temperature effective to cure the composition.

Still further, the present invention is directed to a mixture of a promoter for decomposition of an organic peroxide initiator for an ethylenically unsaturated polyester or vinyl ester, with an inhibitor of polymerization of the ethylenically unsaturated polyester or vinyl eater, wherein the inhibitor is present in an amount with respect to the amount of the promoter present such that the gel time of a composition containing the mixture, the heat-curable ethylenically unsaturated polyester or vinyl ester, and an organic peroxide initiator for polymerization of the polyester or vinyl ester, is independent of the amount of the promoter that is present.

A preferred embodiment of the present invention constitutes a 2-component kit in which one of the components is the aforementioned mixture of promoter and inhibitor and the other component is an organic peroxide which is capable upon heating to decompose into free radicals which initiate polymerization curing of the ethylenically unsaturated polyester or vinyl ester, wherein the peroxide exhibits a ten-hour half-life temperature greater than or equal to 30°C.

The heat-curable polymers with which the present invention is particularly useful include those based on ethylenically unsaturated polyesters. Optionally, a vinyl or vinylidine monomer copolymerizable therewith may also be present, as may a crosslinking agent containing one or two distinct ethylenically unsaturated sites. Preferably, the ethylenically unsaturated polyester is one or more α, β-ethylenically unsaturated polyesters.

α,β-Ethylenically unsaturated polyesters of this type are the usual polycondensation products of (i) at least one α,β-ethylenically unsaturated dicarboxylic acid generally containing 4 or 5 carbon atoms or its ester-forming derivatives, optionally in admixture with up to 90 mole %, based on the unsaturated acid components, of at least one aliphatic saturated dicarboxylic acid containing from 4 to 10 carbon atoms or a cycloaliphatic dicarboxylic acid containing from 8 to 10 carbon atoms or their ester-forming derivatives, with (ii) at least one polyhydroxy compound, more especially a dihydroxy compound, containing from 2 to 8 carbon atoms, i.e. polyesters of the type described, for example, by J.R. Lawrence in "Polyester Resins", Reinhold Publ. Corp., New York 1960, pages 18 et seq, and by Goerden-Vieweg in Kunststoff-Handbuch, Vol, VIII ("Polyester"), Carl Hanser Verlag, Munich 1973, pages 247 to 312.

Examples of preferred unsaturated dicarboxylic acids or their derivatives are maleic acid or maleic acid anhydride and fumaric acid. However, it is also possible to use, for example, mesaconic acid, citraconic acid, itaconic acid or chloromaleic acid. Examples of the aliphatic saturated dicarboxylic acids and cycloaliphatic dicarboxylic acids or their derivatives used in accordance with the invention are phthalic acid or phthalic acid anhydride, isophthalic acid, terephthalic acid, hexahydro or tetrahydrophthalic acid or their anhydrides, endomethylene tetrahydrophthalic acid or its anhydride, succinic acid or succinic acid anhydride and succinic acid esters and chlorides, adipic acid and sebacic acid. In order to produce substantially non-inflammable resins, it is possible to use, or example, hexachloroendomethylene tetrahydrophthalic acid (HET-acid), tetrachlorophthalic acid or tetrabromophthalic acid. Preferred polyesters contain maleic acid residues of which from 25 mole % to 75 mole % may be replaced by phthalic acid or isophthalic acid residues. Suitable dihydric alcohols are ethylene glycol, 1,2-propane diol, 1,3-propane diol, diethylene glycol, dipropylene glycol, thiodiglycol, 1,3-butane diol, 1,4-butane diol, neopentyl glycol, 1,6-hexane diol, 2,2-bis-(4-hydroxy-cyclohexyl)-propane, bis-alkoxylated bisphenol A, perhydro bisphenol and others. It is preferred to use ethylene glycol, 1,2-propane diol, diethylene glycol and dipropylene glycol.

Further modifications are possible by incorporating up to 10 mole %, based on the alcohol or acid component, of monohydric, trihydric and/or tetrahydric alcohols containing from 1 to 6 carbon atoms, such as methanol, ethanol, butanol, allyl alcohol, benzyl alcohol, cyclohexanol and tetrahydrofuryl alcohol, trimethylol propane, glycerol and pentaerythritol, and of mono-, di- and tri-allyl ethers and benzyl ethers of trihydric and polyhydric alcohols containing from 3 to 6 carbon atoms according to German Auslegeschrift No. 1,024,654, and also by incorporating monobasic acids, such as benzoic acid or long-chain unsaturated fatty acids, such as oleic acid, linseed oil fatty acid and ricinine fatty acid.

The acid numbers of the polyesters usually amount to between 1 and 100 and preferably to between 20 and 70, their OH-numbers to between 10 and 150 and preferably to between 20 and 100, and the molecular weights measured as number averages (Mₙ) to between about 500 and 5000 and preferably to between about 1000 and 3000 (as measured by vapor pressure osmometry in dioxane and acetone; in the case of differing values, the lower value is taken as the correct value).

Suitable copolymerizable vinyl and vinylidene compounds are the unsaturated compounds commonly encountered in polyester technology which preferably contain α-substituted vinyl groups or β-substituted allyl groups, preferably styrene, and also, for example, nucleus-chlorinated and - alkylated or -alkenylated styrenes, the alkyl groups containing from 1 to 4 carbon atoms, such as for example vinyl toluene, divinyl benzene, α-methyl styrene, tert-butyl styrene or chlorostyrenes; vinyl esters of carboxylic acids with 2 to 6 carbon atoms, preferably vinylacetate; vinyl pyridine, vinyl naphthalene, vinyl pyrrolidone, vinyl cyclohexane, acrylic acid and methacrylic acid and/or their esters (preferably vinyl, allyl and methyl esters) with 1 to 4 carbon atoms in the alcohol component, their amides and nitriles, maleic acid anhydride, semiesters and diesters with 1 to 4 carbon atoms in the alcohol component, semiamines and diamines or cyclic imides such as N-methyl maleic imide or N-cyclohexyl maleic imide; allyl compounds, such as allyl benzene, and allyl esters, such as allyl acetate, phthalic acid diallyl ester, isophthalic acid diallyl ester, fumaric acid diallyl ester, allyl carbonates, diallyl carbonates, triallyl phosphate and triallyl cyanurate.

When a vinyl or vinylidine comonomer is present, it will generally comprise up to about 60% by weight of the amount of the resin present.

Vinyl ester resins useful in this invention include those which are described in U.S. Patent No. 3,367,992 wherein dicarboxylic acid half esters of hydroxyalkyl acrylates or methacrylates are reacted with polyepoxide resins. Bowen in U.S. Patent Nos. 3,066,112 and 3,179,623 describes the preparation of vinyl ester resins from monocarboxylic acids such as acrylic and methacrylic acid. Bowen also describes alternate methods of preparation wherein a glycidyl methacrylate or acrylate is reacted with the sodium salt of a dihydric phenol such as bisphenol A. Vinyl ester resins based on epoxy novolac resins are described in U.S. Patent No. 3,301,743 to Fekete et al. Fekete et al. also describe in U.S. Pat. No. 3,256,226 vinyl ester resins wherein the molecular weight of the polyepoxide is increased by reacting a dicarboxylic acid with the polyepoxide resin as well as acrylic acid. Other difunctional compounds containing a group which is reactive with an epoxide group, such as an amine, mercaptan, and the like, may be utilized in place of the dicarboxylic acid. All of the above-described resins, which contain the characteristic linkages
-C(O)-OCH₂CH(OH)CH₂O-
and terminal, polymerizable vinylidene groups, are classified as vinyl ester resins and are incorporated herein by reference.

Briefly, any of the known polyepoxides may be employed in the preparation of the vinyl ester resins useful in this invention. Useful polyepoxides are glycidyl polyethers of both polyhydric alcohols and polyhydric phenols, epoxy novolacs, epoxidized fatty acids or drying oil acids, epoxidized diolefins, epoxidized diunsaturated acid esters as well as epoxidized unsaturated polyesters, so long as they contain more than one oxirane group per molecule. The polyepoxides may be monomeric or polymeric.

Preferred polyepoxides are glycidyl polyethers of polyhydric alcohols or polyhydric phenols having weights per epoxide group of about 150 to 2000. These polyepoxides are usually made by reacting at least about two moles of an epihalohydrin or glycerol dihalohydrin with one mole of the polyhydric alcohol or polyhydric phenol, and a sufficient amount of a caustic alkali to combine with the halogen of the halohydrin. The products are characterized by the presence of more than one epoxide group per molecule, i.e., a 1,2-epoxy equivalency greater than one.

Unsaturated monocarboxylic acids include acrylic acid, methacrylic acid, halogenated acrylic or methacrylic acid, cinnamic acid and the like and mixtures thereof, and hydroxyalkyl acrylate or methacrylate half esters of dicarboxylic acids as described in U.S. Patent No. 3,367,992 wherein the hydroxyalkyl group preferably has from 2 to 6 carbon atoms.

Preferably, the thermosettable resin phase comprises from 40 to 70 weight percent of the vinyl ester or polyester resin and from 60 to 30 percent of a copolymerizable monomer.

Suitable monomers include vinyl aromatic compounds such as styrene, vinyltoluene, divinylbenzene and the like saturated alcohols such as methyl, ethyl, isopropyl, octyl, etc., esters of acrylic acid or methacrylic acid; vinyl acetate, diallyl maleate, dimethallyl fumarate; mixtures of the same and all other monomers which are capable of copolymerizing with the vinyl ester resin and are essentially water insoluble.

Another embodiment of this invention utilizes a modified vinyl ester resin wherein about 0.1 to 0.6 mole of a dicarboxylic acid anhydride per equivalent of hydroxyl is reacted with the vinyl ester resin. Both saturated and unsaturated acid anhydrides are useful in said modification.

Suitable dicarboxylic acid anhydrides containing ethylenic unsaturation include maleic anhydride, the citraconic anhydride, itaconic anhydride, anhydrides of aliphatic unsaturated dicarboxylic acid and the like. The modified vinyl ester resin is utilized in this invention in the same manner as already described for the unmodified vinyl ester resin.

A significant aspect of the present invention is that the heat-curable polyester or vinyl ester resin composition contains both a promoter and an inhibitor, wherein the promoter and inhibitor are present in certain carefully controlled amounts with respect to each other.

The promoter is a transition metal salt, or a combination of two or more transition metal salts. Suitable transition metals include manganese, iron, cobalt, nickel, copper, and tin. The salts are preferably one or more halides, carboxylates, alkoxides, amines, or mixtures thereof.

The halides include fluorides, chlorides, and bromides, the chlorides being preferred.

Preferably, the carboxylates are derived from organic monocarboxylic acids that have from 6 to 24 carbon atoms. The useful acids include saturated and unsaturated aliphatic, aromatic, and alicyclic monocarboxylic acids, for example, hexanoic acid, heptanoic acid, 2-ethylhexanoic acid, octanoic acid, nonanoic acid, isononanoic acid, lauric acid, myristic acid, stearic acid, arachidic acid, behenic acid, oleic acid, linoleic acid, erucic acid, benzoic acid, p-tert-butylbenzoic acid, salicylic acid, naphthenoic acid, ricinoleic acid, α-hydroxystearic acid, monobutyl maleate, monodecyl phthalate, cyclopentanoic acid, cyclohexanoic acid, cycloheptanoic acid, and methylcyclohexanoic acid. It is generally preferred that salts of aliphatic monocarboxylic acids having 8 to 12 carbon atoms or alicyclic acids having 5 to 7 carbon atoms be present in the accelerator systems. The cobalt naphthenate and cobalt 2-ethylhexanoate and mixtures thereof are especially preferred.

The preferred alkoxides are straight or branched saturated alkoxides containing 2 to 24 carbon atoms.

The preferred amines are primary and secondary amines substituted with alkyl containing a total of 2 to 24 carbon atoms.

The preferred inhibitors are, for example, phenols or phenol derivatives, including sterically hindered phenols which contain alkyl substituents with 1 to 6 carbon atoms in one or both ortho-positions to the phenolic hydroxy group, β-diketones, amines, preferably secondary arylamines and their derivatives, quinones, copper salts of organic acids, and addition compounds of copper (I) halides with phosphites. Examples include 4,4-bis-(2,6-di-tert.-butyl-phenol), 1,3,5-trimethyl-2,4,6-tris-(3,5-di-tert.-butyl-4-hydroxybenzene), 4,4'-butylidene-bis-(6-tert.-butyl-m-cresol), 3,5-di-tert.-butyl-4-hydroxybenzyl phosphonic acid diethyl ester, N,N'-bis-(β-naphthyl)-p-phenylene diamine, N,N'-bis-(1-methylheptyl)-p-phenylene diamine, phenyl-β-naphthylamine, 4,4'-bis-(α-α-dimethylbenzyl)-diphenylamine, 1,3,5-tris-(3,5-di-tert.-butyl-4-hydroxyhydrocinnamoyl)-hexahydro-s-triazine, hydroquinone, p-benzoquinone, toluhydroquinone, trimethyl hydroquinone, 3,5-di-tert.-butyl hydroquinone, 2,6-di-tert.-butyl hydroquinone, 3,5-dibutyl quinone, p-tert.-butyl pyrocatechol, chloranil, bromanil, naphthoquinone, copper naphthenate, copper octoate, Cu(I)Cl/triphenyl phosphite, Cu(I)Cl/-trimethyl phosphite, Cu(I)Cl/trischloroethyl phosphite, Cu(I)Cl/tripropyl phosphite or p-nitrosodimethyl aniline. Other suitable stabilizers are described in "Methoden der organischen Chemie" (Houben-Weyl), 4th Edition, Vol. XIV/1, pages 433-452, 756, Georg Thieme-Verlag, Stuttgart, 1961.

The preferred inhibitors include hydroquinone, benzoquinone, tert-butyl catechol and most preferably 4-methoxyphenol (also known as hydroquinone monomethyl ether) and 4-ethoxyphenol. Mixtures of inhibitors are also contemplated.

It has surprisingly been discovered that heat-curable compositions containing a major amount of an ethylenically unsaturated polyester, and/or vinyl ester, and an organic peroxide initiator component, can be formulated such that when the promotor and inhibitor are present in amounts with respect to each other that are in a certain relationship, the composition exhibits all the advantages provided by the presence of the promoter and the inhibitor, yet exhibits curing behavior which is independent of the amount of the promoter present (and thus also independent of the amount of the inhibitor present) such that the amount of the organic peroxide initiator present is essentially the only composition variable affecting the curing performance of the heat-curable composition. This is a particularly surprising discovery in that one would have expected in all cases that the amount of promoter, the amount of inhibitor, and the amount of peroxide initiator would all contribute essentially independently of one another to the curing performance of the composition, thus requiring multi-variable balancing of conditions and imposing complexity on the task of obtaining reproducible curing performance.

Now, however, by virtue of this discovery, it is possible to attain the advantages of the promoter, and the advantages of the inhibitor, while obtaining the freedom that is provided by having to adjust only the organic peroxide initiator content in order to obtain desired curing characteristics such as gel time.

Processing in accordance with this invention also provides improvements in the gel time, the pot life, and the balance between gel time and pot life.

More particularly, it has been found that the ratio by weight of the promoter (as the metal) to the inhibitor should be in the range of about 1:1 to 0.01:1, preferably about 0.9:1 to about 0.05:1, and yet more preferably about 0.8:1 to 0.1:1. While the curing performance of the composition is essentially independent of the promoter content provided that this ratio is observed, it will be appreciated that for practical reasons the amounts of promoter and of inhibitor should be within reasonable limits. Thus, the amount of promoter (based on the metal) should in general be within the broadly defined range of about 0.0001 to about 0.50 phr (parts by weight per hundred parts by weight of resin, including any added reactive polymerizable monomer), preferably within the range of about 0.0005 to 0.4 phr, and more preferably about 0.001 to 0.3 phr. The inhibitor should be present in the range of about 0.0001 to about 1.0 phr, preferably about 0.001 to about 0.75 phr, and more preferably about 0.005 to 0.5 phr.

The present invention is particularly useful with organic peroxide initiators having 10-hour half-life temperatures of 30°C or higher. Where some sustained pot life is desirable (as is the case with some extrusion and molding processes), the peroxide initiator should exhibit a 10-hour half-life temperature equal to or greater than 90°C. As is known in this field, the 10-hour half-life temperature is defined as the temperature at which a given peroxide compound is 50% converted to its decomposition products upon residing at that temperature for 10 hours. Organic peroxides exhibiting this property can readily be identified by those of ordinary skill in this art from published references and commercial literature. In addition, the 10-hour half-life temperature of any given peroxide can readily be determined by those of ordinary skill in this art by the application of well-known analytical techniques.

Examples of peroxides exhibiting this property include t-butyl peroxybenzoate, t-amyl peroxybenzoate, t-butyl peroxyisononanoate, t-amyl peroxyisononanoate, t-butyl peroxy-2-methylbenzoate, t-amyl peroxy-2-methyl benzoate, t-butyl peroxyacetate, t-amyl peroxyacetate, di-(4-t-butyl-cyclohexyl)peroxydicarbonate, t-butyl peroxy isopropyl carbonate, and 1,1-di-(t-butyl peroxy)-3,5,5-trimethylcyclohexane. Other useful peroxides include cumyl peroxyneodecanoate, cumyl peroxyneoheptanoate, di-(sec-butyl) peroxydicarbonate, di-(2-ethylhexyl) peroxydicarbonate, t-amyl peroxyneodecanoate, t-butyl peroxyneodecanoate, t-amyl peroxyneoheptanoate, t-butyl peroxyneoheptanoate, t-amyl peroxypivalate, t-butyl peroxypivalate, di-isononanoyl peroxide, 2,5-dimethyl-2,5-di-(2-ethylhexanoylperoxy) hexane, t-amyl peroxy 2-ethylhexanoate, t-butyl peroxy 2-ethylhexanoate, benzoyl peroxide, 1,1-bis (t-amyl peroxy) cyclohexane, 1,1-bis (t-butyl peroxy) cyclohexane, t-butyl peroxy-2-ethylhexyl carbonate, dicumyl peroxide, di-tert-amyl peroxide, di-tert-butyl peroxide, cumene hydroperoxide, methyl ethyl ketone peroxide, and 2,4-pentanedione peroxide. The more preferred peroxides for purposes of this invention are t-amyl peroxybenzoate and t-butyl peroxyisononanoate. Other satisfactory peroxide initiators can be formed by blending two or more peroxide compounds.

The organic peroxide initiator component should be present in an amount effective to initiate desired curing of the ethylenically unsaturated resin component upon exposure to the initiating temperature. While the particular amount can readily be identified for a given set of components and amounts, it can generally be stated that the amount of the organic peroxide initiator component should in general be in the range of about 0.1 to about 10 phr, preferably in the range of about 0.3 to about 7.5 phr, and more preferably in the range of about 0.4 to about 6.0 phr.

Heat-curable resin formulations prepared in accordance with this description provide a number of advantageous properties. One of the principle advantages, as mentioned, is the relative freedom provided to the formulator in that the peroxide initiator concentration is the only composition variable affecting curing performance. This in turn provides the operator considerable increased freedom, and also increases the inherent safety of the system and its use.

In practice, the promoter and the inhibitor can be compounded per se into the polymerizable resin. Alternatively, the promoter and inhibitor can be combined in a suitable solvent, and the resulting solution then combined with the polyester resin. Suitable solvents can readily be identified by those of ordinary skill in this art. Examples include mineral spirits, benzene, toluene, xylene, mesitylene, or 2,2,4-trimethyl-1,3-pentane diol diisobutyrate ("TXIB"). The preferred solvent is a mixture of mineral spirits and TXIB. In those embodiments wherein another polymerizable comonomer is also present, such as styrene, vinyl toluene, divinyl benzene, methyl acrylate, methylmethacrylate, or 2-(acetoacetoxy) ethyl methacrylate, the monomer can be present in the solvent or in appropriate cases the monomer can in fact serve as the solvent.

The resulting polymerizable resin compositions can be used in any manner in which heat-curable polyester resin compositions can be used.

A particularly preferred operation that uses to advantage the heat-curability of the composition is known as pultrusion. This operation employs a solid, fibrous reinforcing medium, typically glass fibers and/or a mat of interwoven glass fibers. The reinforcing medium is continuously pulled through a bath containing the heat-curable resin composition (which also contains in the case of the present invention the promoter, inhibitor, and organic peroxide initiator component). The composition is in the liquid state, as such or by virtue of its being dissolved or dispersed in a suitable liquid solvent or vehicle such as any of the aforementioned monomers in the liquid state. The reinforcing medium is continually pulled through the resin bath and then through a heated die. The heat imparted by the die cures the resin in the die, so that the shape which is imparted to the composite of composition and reinforcing medium by the die is retained. As is well known, any of a limitless number of cross-sectional profiles can be imparted to the resulting solid article by the die.

The present invention is particularly useful in pultrusion operations, particularly because the operator need adjust only the level of peroxide initiator in the heat-curable composition in order to adjust the operation characteristics such as the dimensions of the object being formed, in order to obtain optimum curing conditions and characteristics.

Other examples of curing operations to which the present invention is applicable include filament winding, sheet and bulk molding compounds, resin transfer molding, and thermoset injection molding.

In any of these operation a reinforcing medium can be included. It can comprise filaments, or chopped fibrous matter, for example.

Curing of the composition is generally provided by heating it to a temperature on the order of about 80°F to about 800°F. As is recognized in this field, the particular temperature can be adjusted by the operator to afford a desired time of onset of cure, and rate of cure. Preferred operations are carried out at 100°F to 700°F and more preferably at 120°F to 500°F. These may in turn be affected by considerations of the dimensions of the cured article, the desired rate of production, and the like.

The promoter and the inhibitor can be combined as indicated whereupon the mixture is compounded with the polyester or vinyl ester resin, or if desired the promoter and the inhibitor can be compounded separately into the resin.

The present invention is illustrated in the following examples, which are provided for purposes of disclosure and are not to be construed as limiting the scope of that which is regarded to be the invention.

### Example 1

### Materials

**Resin:** A general purpose polyester resin (Reichhold 31020-03) was used.
**Promoters:** Cobalt naphthenate promoter was used as a 6% Co solution in mineral sprits (OMG Chemical). Cobalt 2-ethylhexanoate promoter was used as a 12% Co solution in mineral sprits (Strem Chemical).
**Inhibitors:** All of the inhibitors--4-methoxy phenol (HQMME), 4-ethoxy phenol (HQMEE); hydro quinone (HQ); t-butyl catechol (TBC); dimethoxybenzene (DMB) --were purchased from Aldrich. (All are commercially available in bulk.)
**Promoter/Inhibitor Pre-mixes:** The promoter/inhibitor solutions (Pro/In Solns) were made using the following general procedure:

The inhibitor (HQMME, HQMEE, HQ, etc.) was dissolved in an appropriate solvent (txib, toluene, etc.) then the desired amount of promoter solution (cobalt naphthenate [6% Co] in mineral spirits or cobalt 2-ethylhexanoate [12% Co] in mineral sprits) was added to produce the final solution. The order of reagent addition is not important. The concentrations of the pro/in solns used in the examples were as follows:
- Examples 3.01-3.07 and 4.01-4.05:66.7% cobalt naphthenate solution (6% Co in odorless mineral spirits), 26.6% txib, and 6.7% inhibitor,
- Example 5.01 - 50% cobalt naphthenate solution (6% Co in odorless mineral spirits), 40% txib, and 10% HQMME;
- Example 5.02 - 50-% cobalt naphthenate solution (6% Co in odorless mineral spirits), 40% toluene, and 10% HQMME;
- Example 5.03 - 50% cobalt 2-ethylhexanoate solution (12% Co in odorless mineral spirits), 40% N-methyl pyrrolidone, and 10% HQMME;
- Example 5.04 - 50% cobalt 2-ethylexanoate solution (12% Co in odorless mineral spirits), 40% 2-(acetoacetoxy)ethylmethacrylate, and 10% HQMME.

### Hot Block Gel Experiments

A hot block gel tester was used to evaluate resin cure characteristics. Experiments were performed using the following procedure:

A 50.0± 0.10g sample of resin was measured into a 5 oz. paper cup. Any promoter (metal salts, e.g. cobalt naphthenate solution) and inhibitor (e.g. HQMME) or the premixed promoter/inhibitor solution were added to the resin at ±0.01g and blended into the resin using a spatula. The peroxide initiator was then weighed into the cup at ±0.01g followed by blending with a spatula. All resin samples are made consecutively to reduce bias errors. The resulting mixture was covered and equilibrated at room temperature for 15 to 30 minutes. A 5 mL aliquot of the catalyzed resin mix was delivered to the cavity of a pre-heated hot block tester. The cavity was lubricated with silicone grease as a release agent. The temperature of the resin during cure was recorded via a thermocouple and chart recorder. Each experiment was terminated after the peak exotherm was observed.

Gel time was taken at 10°F above the block temperature. Peak exotherm is the maximum temperature achieved during the cure process. Exotherm time (exo time) is the time at which peak exotherm is reached.

### Pot Life

The remaining catalyzed resin sample (prepared above) was left at ambient temperature (i.e. 72-77°F) and checked periodically for signs of gel. Initiated resin pot life was taken as the first sign of gel formation in the sample. When a range is reported, that range is from the last time the sample was checked without gel to the time the first gel was observed.

### Discussions of Examples

Table 1 (Examples 1.01-1.05) shows typical effects of varying inhibitor, promoter, and peroxide levels on the cure of unsaturated polymer resins. As the concentration of inhibitor is increased, the time to cure and pot life also increase. Conversely, an increase of promoter relative to peroxide or of peroxide results in a decrease in the time to cure and pot life. The control of resin cure is complicated since each additive can have a dramatic effect.

Table 2 (Examples 2.01-2.09) depicts the inventive system wherein relatively constant cure characteristics are achieved through the proper formulation of promoter to inhibitor. If the proper ratio of promoter to inhibitor is used, the same cure response is achieved over a broad usage level. The cure is controlled by varying the peroxide concentration.

Table 3 (Examples 3.01-3.07) shows how the invention can be further simplified via the pre-mixing of the promoter and inhibitor in an appropriate solvent. This offers a safer, more reproducible means of delivering the additives to the resin prior to cure. Again, the cure characteristics are constant over a range of additive addition. Long pot life is also shown.

The performance of various inhibitors is included in Table 4 (Examples 4.01-4.05). Hydroquinone monomethyl ether (HQMME) and hydroquinone monoethyl ether (HQMEE) offer the best performance in both resin cure and pot life. Hydroquinone (HQ) and t-butyl catechol (TBC) gave good cure response but are less effective in enhancing pot life. Dimethoxybenzene (DMB) was least effective. With DMB, the pot life was too short to measure cure performance.

The effect of various solvents on the performance of the pre-mixed promoter/inhibitor solutions is shown in Table 5 (Examples 5.01-5.04). Included are examples of non-polymerizable solvents--txib, toluene, and N-methyl pyrrolidone--and a polymerizable solvent--(acetoacetoxy)ethyl methacrylate. Also in Table 5, the efficacy of two different promoters--cobalt naphthenate and cobalt 2-ethylhexanoate--is depicted.

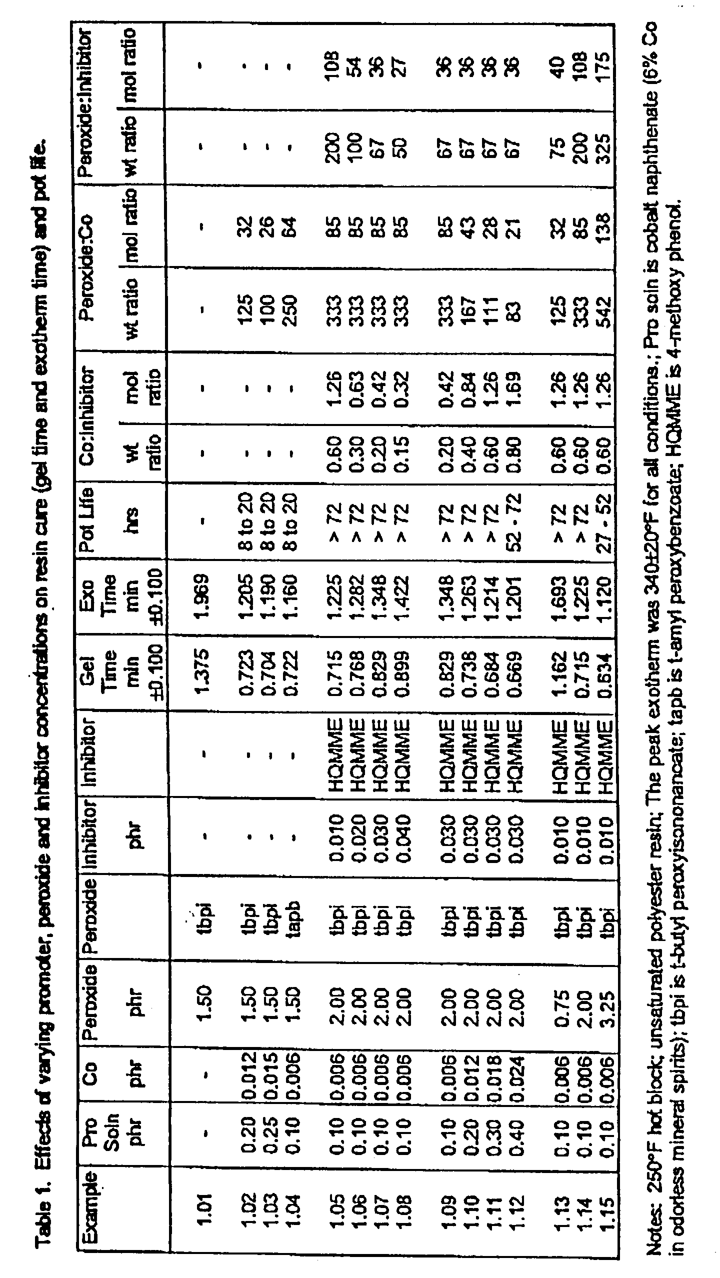

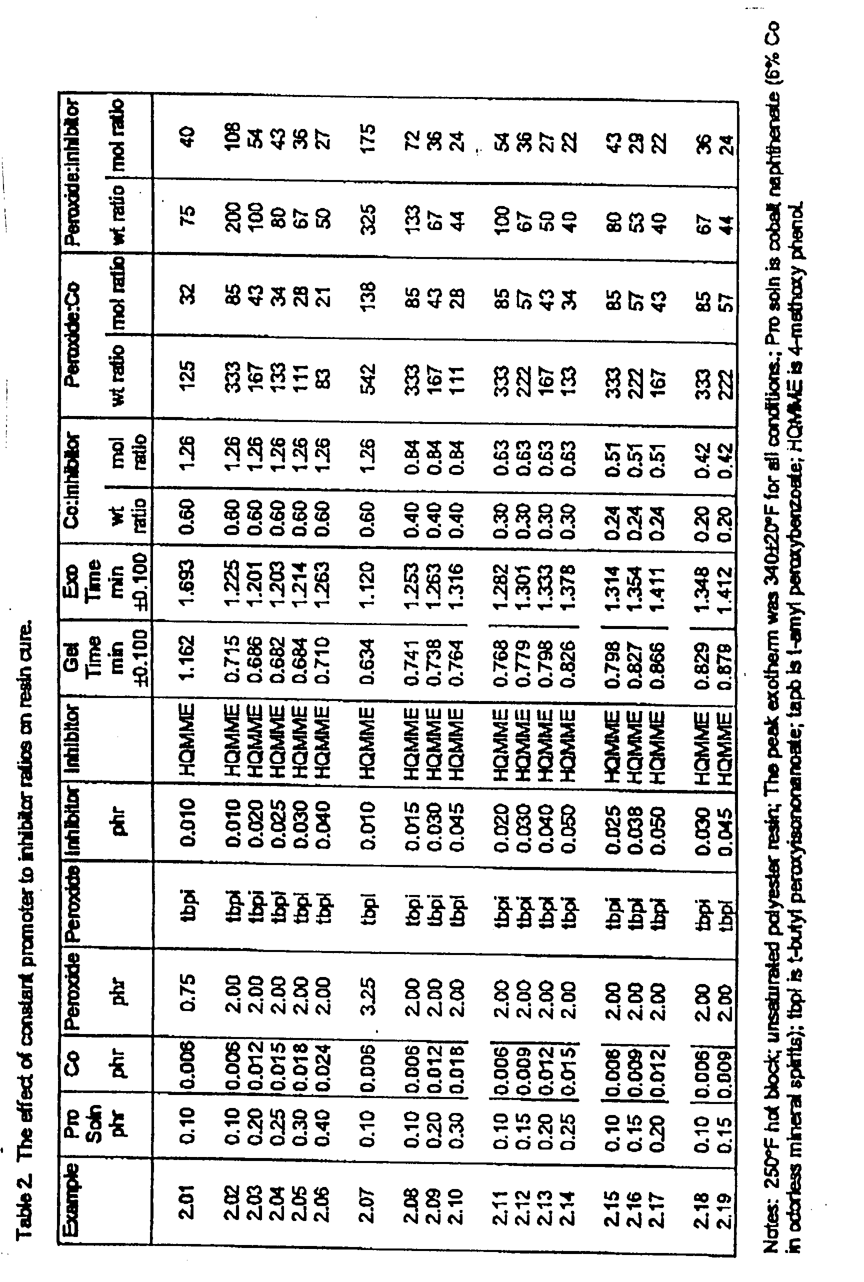

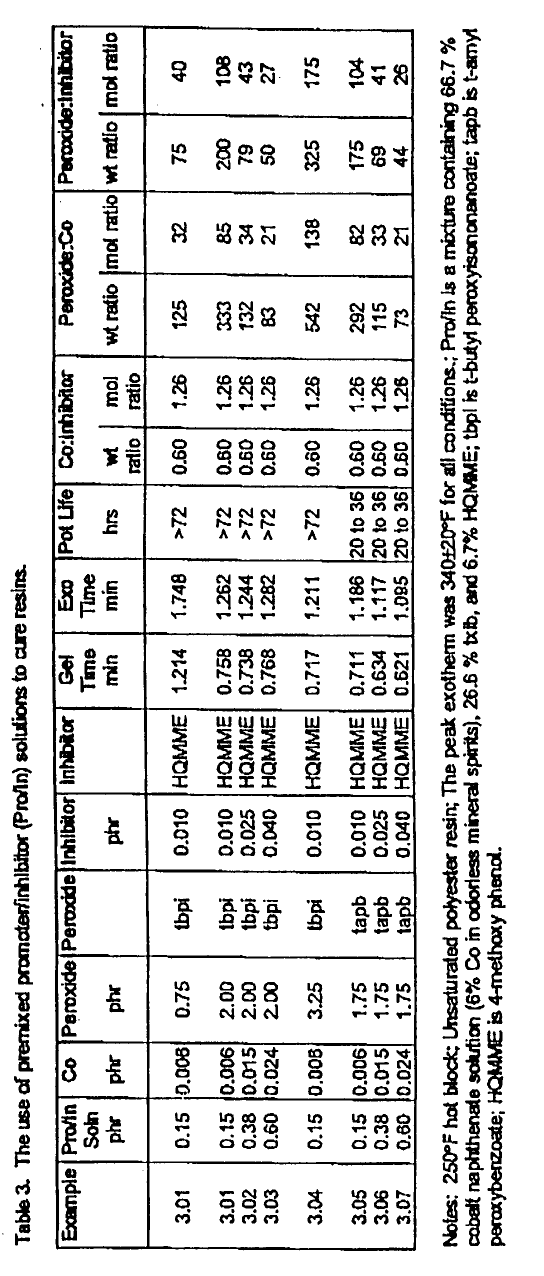

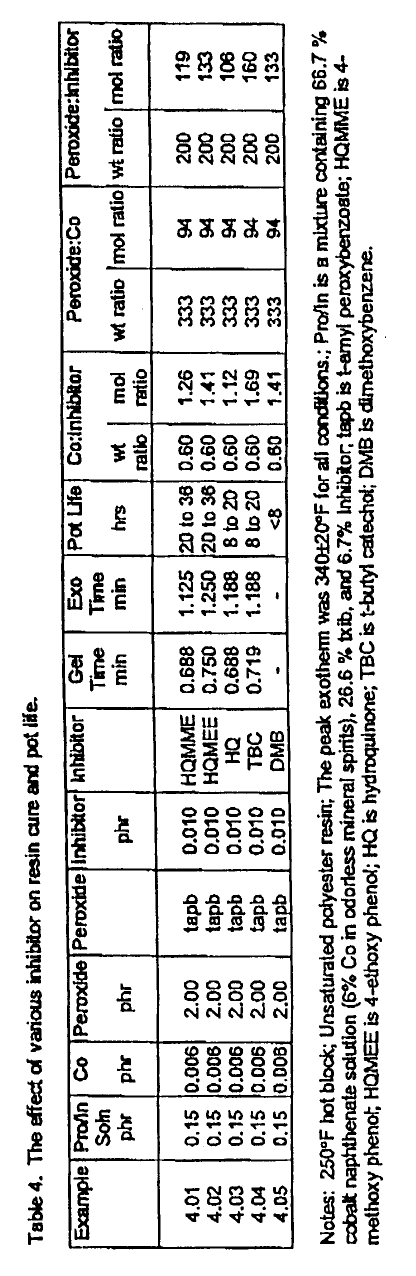

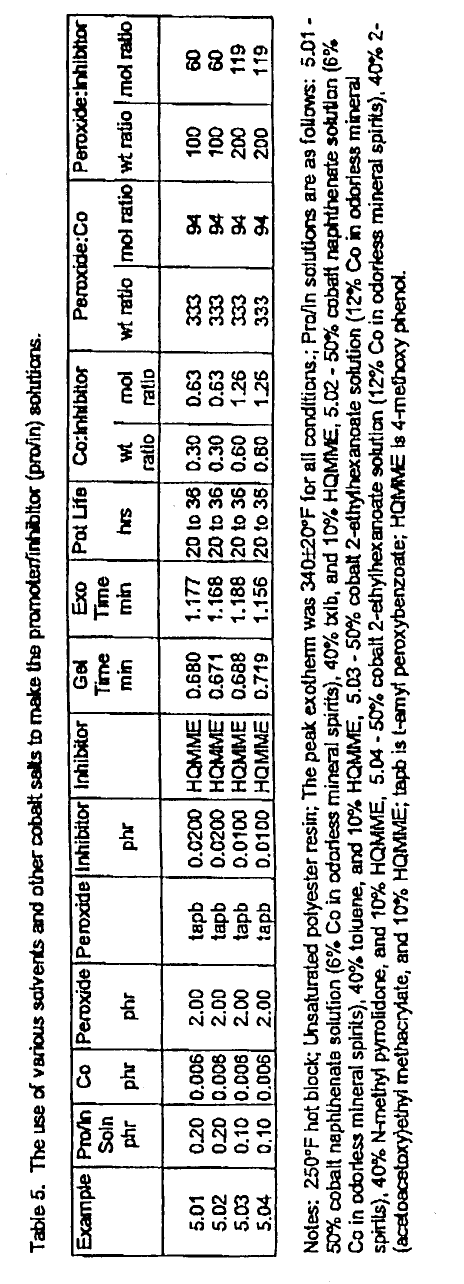

## Claims

1. A heat-curable polymer composition comprising
(a) a resin selected from the group consisting of ethylenically unsaturated polyesters and vinyl esters, and mixtures thereof;
(b) an organic peroxide component which is capable upon heating to decompose into free radicals which initiate polymerization curing of said resin, which peroxide component exhibits a ten-hour half-life temperature greater than 30°C.;
(c) a promoter for decomposition of said peroxide and an inhibitor of polymerization of said resin, wherein said inhibitor is present in an amount with respect to the amount of said promoter present such that the gel time of said composition is independent of the amount of said promoter that is present.

2. A composition in accordance with claim 1 wherein the ratio by weight of said promoter, based on its metal content, to said inhibitor is about 1:1 to about 0.01:1.

3. A composition in accordance with claim 2 wherein said ratio is about 0.8:1 to about 0.1:1.

4. A composition in accordance with claim 1 wherein said organic peroxide component is selected from the group consisting of t-butyl peroxybenzoate, t-amyl peroxybenzoate, t-butyl peroxyisononanoate, t-amyl peroxyisononanoate, t-butyl peroxy-2-methyl benzoate, t-amyl peroxy-2-methyl benzoate, t-butyl peroxyacetate, t-amyl peroxyacetate, di-(4-t-butyl-cyclohexyl)peroxydicarbonate, t-butyl peroxy isopropyl carbonate, and 1,1-di-(t-butyl peroxy)-3,5,5-trimethylcyclohexane and mixtures thereof.

5. A composition in accordance with claim 1 wherein said promoter is selected from the group consisting of transition metal carboxylates and transition metal halides.

6. A composition in accordance with claim 5 wherein said promoter is selected from the group consisting of cobalt naphthenate, cobalt 2-ethyl hexanoate, and mixtures thereof.

7. A composition in accordance with claim 1 wherein said inhibitor is selected from the group consisting of tert-butyl catechol, hydroquinone, benzoquinone, 4-methoxyphenol, 4-ethoxy phenol, and mixtures thereof.

8. A composition in accordance with claim 1 further comprising a copolymerizable comonomer selected from the group consisting of unsaturated vinyl compounds, unsaturated vinylidene compounds, and mixtures thereof.

9. A method of curing an ethylenically unsaturated resin, comprising heating a heat-curable composition in accordance with any one of claims 1 to 8 to a temperature effective to cure said mixture.

10. A mixture useful for promoting the heat-induced curing of a composition comprising a resin selected from the group consisting of ethylenically unsaturated polyesters and vinyl esters and mixtures thereof, and an organic peroxide initiator component which decomposes upon heating into free radicals which initiate polymerization curing of said resin, said peroxide exhibiting a 10-hour half-life temperature greater than 30°C, said mixture comprising
a promoter for decomposition of said peroxide and an inhibitor of polymerization of said resin wherein said inhibitor is present in an amount with respect to the amount of said promoter present such that the gel time of a composition containing said resin, said initiator component and said mixture is independent of the amount of the said promoter that is present in said composition.

11. A mixture in accordance with claim 10 wherein the ratio by weight of said promoter, based on its metal content, to said inhibitor is about 1:1 to 0.01:1.

12. A mixture in accordance with claim 11 wherein said ratio is 0.8:1 to 0.1:1.

13. A mixture in accordance with claim 10 wherein said organic peroxide inhibitor component is selected from the group consisting of t-butyl peroxybenzoate, t-amyl peroxybenzoate, t-butyl peroxyisononanoate, t-amyl peroxyisononanoate, t-butyl peroxy-2-methyl benzoate, t-amyl peroxy-2-methyl benzoate, t-butyl peroxyacetate, t-amyl peroxyacetate, di-(4-t-butyl-cyclohexyl)peroxydicarbonate, t-butyl peroxy isopropyl carbonate, and 1,1-di-(t-butyl peroxy)-3,5,5-trimethylcyclohexane and mixtures thereof.

14. A mixture in accordance with claim 10 wherein said promoter is selected from the group consisting of transition metal carboxylates, transition metal halides, and mixtures thereof.

15. A mixture in accordance with claim 14 wherein said promoter is selected from the group consisting of cobalt naphthenate, cobalt 2-ethylhexanoate, and mixtures thereof.

16. A mixture in accordance with claim 10 wherein said inhibitor is selected from the group consisting of tert-butyl catechol, hydroquinone, benzoquinone, 4-methoxyphenol, 4-ethoxyphenol, and mixtures thereof.
